Europäisches Patentamt

European Patent Office

Office européen des brevets

(19)

(11) Veröffentlichungsnummer: **0 234 409**
**A2**

(12) # EUROPÄISCHE PATENTANMELDUNG

(21) Anmeldenummer: **87101898.2**

(22) Anmeldetag: **11.02.87**

(51) Int. Cl.⁴: **A23K 1/00 , A23K 1/14**

(30) Priorität: **12.02.86 DE 3604308**

(43) Veröffentlichungstag der Anmeldung:
**02.09.87 Patentblatt 87/36**

(84) Benannte Vertragsstaaten:
**AT BE CH DE FR IT LI NL**

(71) Anmelder: **Gerhard Bongardt oHG**
**Baerlagweg**
**D-4132 Kamp-Lintfort(DE)**

(72) Erfinder: **Bongardt, Gerhard**
**Altfelder Strasse 363**
**D-4132 Kamp-Lintfort(DE)**

(54) **Tierfutter und Verfahren zur Herstellung des Tierfutters.**

(57) Die Erfindung betrifft ein Tierfutter sowie ein Verfahren zur Herstellung des Tierfutters in Pelletform. Abfälle der Nahrungsmittelindustrie als Ausgangsstoff werden gemischt, auf eine Feinheit von 70 bis 85 Gew.-% unter 2 mm vermahlen, gesiebt und mit einem Trägerstoff oder Trägerstoffgemisch versetzt, so daß der Wassergehalt der Masse 7 bis 13 Gew.-% beträgt. Anschließend wird das Gemisch homogenisiert und pelletisiert.

EP 0 234 409 A2

## Tierfutter und Verfahren zur Herstellung des Tierfutters

Die Erfindung betrifft Tierfutter und ein Verfahren zur Herstellung des Tierfutters in Pelletform aus Abfällen der Nahrungsmittelindustrie und unverdorbenen, für den menschlichen Verzehr jedoch nicht mehr geeigneten oder verkaufsfähigen Nahrungsmitteln.

Tierfutter in Pelletform sind seit langem bekannt und werden für die tierische Ernährung geschätzt. Ihre Erzeugung erfolgt nach verschiedenen Verfahren und aus unterschiedlichen Komponenten. Üblicherweise geht man von Futtermehl aus, das durch Mischen, anschließendes Mahlen und Homogenisieren verschiedener, kohlehydratreicher, fett- und eiweißhaltiger pflanzlicher Produkte, erhalten wird. Bei derartigem, aus organischen Komponenten bestehendem Mischfutter erreicht man eine bessere Verdaulichkeit für die Tiere durch einen Aufschluß der Stärke. Zu diesem Zweck wird das Futtermehl in einer Dampfschnecke, die der Pelletpresse vorgeschaltet ist, hydrothermal behandelt. Dabei wird die Stärke in ihre niedermolekularen, leicht verdaulichen Bausteine aufgespalten. Sie wirken gleichzeitig als Bindemittel für die einzelnen Pellets und tragen entscheidend zu deren Festigkeit und geringem Abrieb bei. Eine weitere Erhöhung der Stabilität der Formkörper kann durch Zumischen von Melasse zum Futtermehl erzielt werden.

Zur Verfütterung an Tiere eignen sich auch die verschiedensten Abfallprodukte der Nahrungsmittelindustrie. Hierzu gehören sowohl Abfälle, die bei der eigentlichen Nahrungsmittelherstellung erhalten werden als auch Produkte, die aus anderen Gründen zum menschlichen Verzehr nicht mehr in den Handel gebracht werden können, obgleich sie in jeder Hinsicht unbedenkliche Nährmittel darstellen. Genannt seien aus optischen Gründen nicht mehr verkäufliche Nahrungsmittel, unverdorbene, aber überlagerte Waren, die z.B. sensorischen Ansprüchen nicht mehr genügt oder Fehlchargen des Herstellungsprozesses. Zur Verarbeitung zu Tierfutter können aus dem Bereich der Back-und Süßwarenindustrie Trockenbackwaren wie Zwieback, Knäckebrot, Paniermehl, sogenanntes Partygebäck wie Salzstangen und Kartoffelchips, Tortenböden, ungefüllte und gefüllte Kekse und Waffeln, z.B. in Form Schokolade und/oder Karamelmasse enthaltender Spezialitäten und ferner Schokolade-und Bonbonmasse eingesetzt werden. Aufgrund ihres Gehaltes an aufgeschlosener Stärke und ihres häufig hohen Fettanteils sind solche ihrer eigentlichen Verwendung entzogenen Produkte allein oder in Kombination mit anderen Nähr-oder Ballaststoffen ausgezeichnet zur Tierernährung zu verwenden. Ihre Nutzbarmachung erfüllt die Forderung, Wertstoffe nicht zu vernichten, sondern in den Wirtschaftsprozeß zurückzuführen.

Als nachteilig für Transport, Vertrieb, Lagerhaltung und Fütterung erweist sich jedoch, daß es nicht gelingt, die genannten Abfallprodukte in stückige Form überzuführen. Verlangt werden Formkörper, die sowohl den Transport als auch die Lagerung in geeigneten Behältern gegebenenfalls über längere Zeiträume überstehen, ohne Neigung zum Abbröckeln, zur Bildung von Abrieb oder zu völligem Zerfall zu zeigen. Verursacht werden diese Schwierigkeiten bei der Verarbeitung durch die Besonderheiten des Einsatzmaterials. Anders als bei der Herstellung von Mischfutter aus Futtermehl kann man nicht davon ausgehen, stets Produkte gleicher Beschaffenheit und stofflicher Verträglichkeit zu verarbeiten. Häufig weisen die Ausgangssubstanzen unterschiedliche Konsistenzen auf. So sind Backwarenabfälle oft spröde und leicht brüchig. Sie können mit festen oder halbfesten fettreichen Füllungen oder Glasuren versehen sein und dann zum Schmieren neigen. Das gleiche gilt für Schokoladenmasse, die fettreich und schmierig ist, für Bonbonmasse, die auf Grund ihres hohen Zuckergehaltes und mehr oder weniger dickflüssiger oder geleeartiger Füllungen klebrig ist und für Karamel. Gelantine, die u.a. Hauptbestandteil verschiedener Süßwaren ist, zeigt wenig Neigung, homogene Mischungen mit Fett oder Kohlehydraten einzugehen.

Die Verarbeitung von Ausgangsstoffen der genannten Art zu Pellets scheitert häufig schon daran, daß auf Grund der fett-und zuckerhaltigen Bestandteile des Gemisches die Matrizen der Pelletpressen verschmieren und die Pellets daher nicht oder nur in Bruchstücken ausgestoßen werden. Gelingt es, die Pellets tatsächlich zu erhalten, dann weisen sie häufig keine ausreichende Festigkeit auf. Überdies ist bekannt, daß die Menge Futtergemischen zugesetzten Fettes begrenzt ist und im allgemeinen weniger als 4 % betragen soll. Fetthaltige Pellets weisen nämlich eine außerordentlich schlechte Formfestigkeit auf. Sie sind weich und zerfallen in kleine Brocken oder Mehl und haben daher keine marktfähige Qualität. Pellets mit mehr als 10 % Fettanteil verformen sich sogar unter normalen Lagerbedingungen vollständig zu einer breiigen Masse.

Es bestand daher die Aufgabe, ein Verfahren zu entwickeln, das es gestattet, Abfälle der genannten Art in handelsüblichen Pelletpressen zu festen Formkörpern zu verarbeiten.

Es muß flexibel sein und sich auf Ausgangsmaterial unterschiedlicher Zusammensetzung und Eigenschaften anwenden lassen ohne daß apparative Änderungen vorgenommen werden müssen. Das Verfahren soll weiterhin stets kontinuierlich durchführbar sein. Zudem muß das Preßprodukt eine hohe Festigkeit aufweisen, d.h. auch über lange Zeiträume, so wie sie für Transport, Vertrieb und Lagerung üblich sind, seine Formstabilität behalten.

Die vorstehend beschriebene Aufgabe wird erfindungsgemäß gelöst durch ein Verfahren zur Herstellung von Tierfutter in Pelletform aus kohlenhydrat-und fettreichen und/oder Proteine enthaltenden Abfällen der Nahrungsmittelindustrie. Es ist dadurch gekennzeichnet, daß den gemischten, auf eine Feinheit von 70 bis 85 Gew.-% unter 2mm vermahlenen und gesiebten Nahrungsmittelabfällen ein Trägerstoff oder Trägerstoffgemisch zweckmäßig gleicher Feinheit in einer solchen Menge zugemischt wird, daß der Wassergehalt der Masse etwa 7 bis 13 Gew.-%, bezogen auf die Gesamtmasse, beträgt, die Mischung darauf homogenisiert und pelletisiert wird.

Erfindungsgemäß kann aus wertlosen Nahrungsmittelabfällen mit Hilfe einer Kombination von Feinmahlung und Siebung, Einstellung eines definierten Wassergehaltes durch Zusatz eines Trägerstoffes oder Trägerstoffgemisches ein Produkt gewonnen werden, das sich zu stabilen Formkörpern verarbeiten läßt, die ein wertvolles Tierfutter darstellen. Besonders bemerkenswert ist dabei, daß die Festigkeit der Pellets ohne Zusatz eines Bindemittels erzielt wird oder durch die verklebenden Eigenschaften gequollener Stärke.

Ausgangsstoffe für das Verfahren gemäß der Erfindung sind Nahrungsmittelabfälle der weiter oben beschriebenen Art, also vor allem kohlenhydratreiches und/oder fettreiches Material.

Es gehören hierzu aber auch Substanzen, die, wie Gelatine, vorwiegend Proteine enthalten. Besonders geeignet sind Abfälle auf Basis von Backwaren, von Zuckerwaren und von Schokolade. Hierzu gehören Brot, Kleingebäck, Feinbackwaren, Dauerbackwaren, Bonbons, Fondants, Gummizuckerwaren, Lakritzwaren.

Ein wesentliches Merkmal der neuen Arbeitsweise ist, daß das zu verformende und die auf eine Mindestfeinheit zerkleinerten Abfälle der Nahrungsmittelindustrie (Basismaterial) enthaltende Gemisch auf einen bestimmten Wassergehalt eingestellt wird. Dieser Wassergehalt wird durch Zusatz eines Trägerstoffes oder Trägerstoffgemisches zu dem Basismaterial erhalten. Er beträgt etwa 7 bis 13 Gew.-% (bezogen auf die Gesamtmasse aus Basismaterial und Trägerstoff). Besonders bewährt hat es sich, den Wassergehalt auf einen Wert von 10 bis 12 Gew.-%, bezogen auf die Gesamtmasse, einzustellen.

Unter dem Begriff Trägerstoff versteht man Substanzen, die selbst Futtermittel für Tiere sein können und die in der Lage sind, Wasser aufzunehmen, Fett zu absorbieren und geleeartige Bestandteile zu binden. Ihr Zusatz zu dem Gemisch zerkleinerter Abfälle stellt sicher, daß die Basismasse plastisch formbare Konsistenz erhält, dabei aber rieselfähig bleibt, so daß die Pelletisiereinrichtungen einwandfrei beschickt werden können. Überdies verleihen sie der Masse eine gewisse Gleitfähigkeit, die Voraussetzung für den problemlosen Ausstoß der Pellets aus der Form der Pelletisiereinrichtung ist. Zudem gewinnen die fertigen Pellets durch Verdunsten eines Teiles oder der gesamten Feuchtigkeit zusätzliche Festigkeit. Als Trägerstoffe geeignet sind vor allem lipophile Substanzen. Hierzu gehören getrocknete Kartoffelpülpe, Manioka, Kartoffelpreßschrot, Kehrmehle, Kartoffelquellstärke, Maisstärke und insbesondere Kakaoextraktionsschrot. Der Trägerstoff kann allein oder als Mischung aus mehreren Trägerstoffen verwendet werden. Die Menge des zuzusetzenden Trägerstoffes richtet sich nach dem Feuchtigkeitsgehalt der zu verarbeitenden Abfälle und beträgt 20 bis 35 Gew.-%, üblicherweise etwa 30 Gew.-% des Basismaterials.

Die Bestimmung der Feuchtigkeit im Basismaterial erfolgt in bekannter Weise. Sie kann z.B. durch Trocknen des Basismaterials bei erhöhter Temperatur unter normalem oder vermindertem Druck und Messung der Gewichtsabnahme ermittelt werden.

In der ersten Stufe des erfindungsgemäßen Verfahrens werden die Nahrungsmittelabfälle, gegebenenfalls nach vorheriger Aufbereitung, z.B. zur Entfernung unerwünschter Fremdstoffe, durch manuelles Auslesen über Band und Absaugen der Leichtfraktion in bekannten Vorrichtungen gemischt. Gleichzeitig mit der Mischung oder in einem gesonderten Arbeitsgang wird das Einsatzmaterial zerkleinert und gesiebt auf eine Feinheit von 70 bis 85 Gew.-% unter 2 mm. Besonders bewährt hat sich eine Feinheit des Basismaterials von 75 bis 80 Gew.-% unter 2 mm.

Sodann wird der Wassergehalt des Basismaterials bestimmt. Entsprechend dem ermittelten Wert wird in einer darauffolgenden zweiten Stufe in einem Mischer oder Kneter die zur Einstellung der erfindungsgemäß einzuhaltenden Wasserkonzentration erforderliche Menge Trägertoff oder Trägerstoffgemisch zugesetzt. Es ist zweckmäßig, daß die Feinheit des Trägerstoffes nicht wesentlich von der Feinheit des Basismaterials abweicht. Besonders bewährt hat es sich, wenn die Feinheit des Basismaterials und die Feinheit des Trägerstoffes übereinstimmen.

Zusammen mit dem Trägerstoff können dem Basismaterial noch weitere Zusatzstoffe zugemischt werden. Hierzu gehören z.B. Vitamine, Konservierungsmittel, Aromastoffe. Falls erforderlich, wird die Masse noch homogenisiert.

Im letzten Verfahrensschritt wird die Mischung pelletisiert. Das Pelletisieren kann in einer gebräuchlichen Pelletisiereinrichtung vorgenommen werden. Die erhaltenen Pellets sind formstabil. Sie können gelagert und transportiert werden, ohne zu zerfallen oder Abrieb zu ergeben. Gegebenenfalls kann der Wassergehalt der fertigen Pellets mit Hilfe eines herkömmlichen Trocknungsverfahrens noch herabgesetzt werden.

Das neue Verfahren ermöglicht die Herstellung stabiler Formkörper, die bis zu 8,5 Gew.-% - (bezogen auf die Gesamtmasse) Fett enthalten.

Besonders bewährt hat es sich, die Bestandteile der zu pelletisierenden Mischung aus Basismaterial und Trägerstoff so zu bemessen, daß ihr Proteingehalt 8 bis 10 Gew.-%, ihr Fettgehalt 6 bis 8,5 Gew.-%, ihr Stärkegehalt 25 bis 32 Gew.-% und ihr Zuckergehalt 15 bis 20 Gew.-% (jeweils bezogen auf die Gesamtmasse) beträgt. Die Energiesumme einer solchen Mischung entspricht etwa der des Weizens. Der Gehalt an Backwaren, die aufgeschlossene Stärke enthalten, erhöht jedoch ihre Futterwertigkeit.

Das nach dem erfindungsgemäßen Verfahren hergestellte Tierfutter ist gut resorbierbar und eignet sich für alle Warmblütler wie Hühner, Kälber, Schafe, Schweine, Rinder und Ziegen.

Beispiel

In einem Mischer werden 100 bis 200 kg verschiedener Backwaren-und Süßwarenabfälle wie Kleingebäck, Brot, Dauerbackwaren, Bonbonmasse, Schokoladenabfälle, deren Zusammensetzung so gewählt wurde, daß der Nährwert des Gemisches etwa 70 EZS beträgt, vorgemischt.

Zur Erzielung einer optimalen Fließfähigkeit kann man dem Gemisch noch je nach Bedarf (bei zu hoher Fließfähigkeit) trockene, pulvrige Lebensmittelabfälle wie Mehle, Puddingpulver, Kakao oder (bei zu geringer Fließfähigkeit) pasteuse bzw. geleeartige Lebensmittelabfälle wie Karamel, Schokolade, Weingummi zusetzen. Über eine Metallrinne gelangt die Vormischung auf ein Förderband, wo sie mit Hilfe eines Magnetbandes von ferromagnetischen Fremdkörpern befreit wird. Anschließend wird sie in einer Hammermühle zerkleinert. Das zerkleinerte Produkt wird gesiebt, um die gewünschte Körnung von 70 bis 85 Gew.-% unter 2 mm zu erhalten, entsprechend seinem Wassergehalt mit 30 kg Kakaoextraktionsschrot als Trägerstoff (mit einer Körnung von 75 bis 80 Gew.-% unter 2 mm je 100 kg Masse (Basismaterial) versetzt, um den Wassergehalt auf etwa 11 Gew.-% einzustellen. Die feinkörnige Masse wird einem Mikromischer zugeführt, gegebenenfalls mit geringen Mengen flüssiger Lebensmittelabfälle wie Öl, Milchnebenprodukte, Honig benetzt und intensiv gemischt. Über eine Kaskade zur nochmaligen Ausscheidung metallischer Fremdkörper gelangt das homogenisierte Material in die Pelletpresse, in der es zu zylindrischen Körpern geformt wird. Nach Auskühlung ist das Produkt verlade-und versandbereit.

**Ansprüche**

1.) Verfahren zur Herstellung von Tierfutter in Pelletform aus kohlenhydrat-und fettreichen und/oder Proteine enthaltenden Abfällen der Nahrungsmittelindustrie, dadurch gekennzeichnet, daß den gemischten, auf eine Feinheit von 70 bis 85 Gew.-% unter 2 mm vermahlenen und gesiebten Nahrungsmittelabfällen ein Trägerstoff oder Trägerstoffgemisch zweckmäßig gleicher Feinheit in einer solchen Menge zugemischt wird, daß der Wassergehalt der Masse 7 bis 13 Gew.-%, bezogen auf die Gesamtmasse, beträgt und die Masse darauf homogenisiert und pelletisiert wird.

2.) Verfahren nach Anspruch 1, dadurch gekennzeichnet, daß der Feuchtigkeitsgehalt 10 bis 12 Gew.-%, bezogen auf die Gesamtmasse, beträgt.

3.) Verfahren nach Anspruch 1 oder 2, dadurch gekennzeichnet, daß der Anteil des Trägerstoffs oder des Trägerstoffgemisches in der Gesamtmasse 20 bis 35 Gew.-%, bezogen auf die Abfälle der Nahrungsmittelindustrie (Basismaterial), beträgt.

4.) Verfahren nach einem oder mehreren der Ansprüche 1 bis 3, dadurch gekennzeichnet, daß als Trägrstoffe lipophile Substanzen zugemischt werden.

5.) Verfahren nach einem der Ansprüche 1 bis 4, dadurch gekennzeichnet, daß als Trägerstoffe Kartoffelpülpe, Manioka, Kartoffelpreßschrot, Kehrmehle, Kartoffelquellstärke, Maisstärke und insbeosndere Kakaoextraktionsschrot allein oder in Mischung aus zwei oder mehr Substanzen zugemischt werden.

6.) Tierfutter aus kohlenhydrat-und fettreichen und/oder Proteine enthaltenden Abfälle der Nahrungsmittelindustrie, insbesondere aus dem Bereich der Backwaren und Süßwarenindustrie wie Backwaren, Zuckerwaren oder Schokolade und einem Trägerstoff oder Trägerstoffgemisch.

7.) Tierfutter nach Anspruch 6, dadurch gekennzeichnet, daß die Trägerstoffe lipophile Substanzen sind.

8.) Tierfutter nach Anspruch 5 oder 6, dadurch gekennzeichnet, daß die Trägerstoffe Kartoffelpülpe, Manioka, Kartoffelpreßschrot, Kehrmehle, Kartoffelquellstärke, Maisstärke und insbesondere Kakaoextraktionsschrot allein oder in Mischung aus zwei oder mehr Substanzen sind.

9.) Tierfutter nach einem oder mehreren der Ansprüche 5 bis 8, dadurch gekennzeichnet, daß sein Proteingehalt 8 bis 10 Gew.-%, sein Fettgehalt 6 bis 8,5 Gew.-%, sein Stärkegehalt 25 bis 32 Gew.-% und sein Zuckergehalt 15 bis 20 Gew.-% - (jeweils bezogen auf die Gesamtmasse) und der Anteil des Trägerstoffs bzw. Trägerstoffgemisches in der Gesamtmasse 20 bis 35 Gew.-%, bezogen auf die Abfälle der Nahrungsmittelindustrie - (Basismaterial), beträgt.